# EUROPÄISCHE PATENTANMELDUNG

(11) **EP 2 868 974 A1**
(43) Veröffentlichungstag der Anmeldung: **06.05.2015**
(21) Anmeldenummer: 14187336.4
(22) Anmeldetag: 01.10.2014
(51) Int. Cl.: F24B 1/18, F24B 9/00, F24C 15/34, H01M 8/18, H01M 8/24, H01M 8/02

(54) **Fertigteilofenmodul**

(30) Priorität: 03.10.2013 AT 501362013
(71) Anmelder: Eisel, Gerald, 8130 Frohnleiten (AT)
(72) Erfinder: Eisel, Gerald, 8130 Frohnleiten (AT)
(74) Vertreter: Schwarz & Partner

(57) **Zusammenfassung**

Die Erfindung betrifft ein Fertigteilofenmodul (1), umfassend zumindest einen Heizeinsatz (10) mit einer Ofenabzugsöffnung (15) sowie einer Luftzufuhröffnung (16), wobei der zumindest eine Heizeinsatz (10) mit einer Kaminanschlussleitung (20) an einem Rauchfangabschnitt (30) angeschlossen ist.

## Beschreibung

Die Erfindung betrifft ein Fertigteilofenmodul, welches zumindest einen Heizeinsatz mit einer Ofenabzugsöffnung sowie einer Luftzufuhröffnung umfasst.

Aus dem Stand der Technik sind unterschiedliche Heizeinsätze bzw. Ofentypen zum Beheizen einzelner Räume oder zur Integration in eine Ganzhausheizung bekannt. Beispielsweise sind vormontierte Kaminöfen, Heizkamine oder Tischherde erhältlich, welche an Ort und Stelle in einem Wohnraum aufgestellt werden und zum Betrieb mit einer Kaminanschlussleitung an einen Rauchfang angeschlossen werden müssen. Nachteilig an dieser bekannten Variante ist, dass die Heizeinsätze, welche üblicherweise sehr schwer sind, nur äußerst mühsam an ihren Aufstellungsort transportiert werden können. Oftmals passieren beim Transport an den Aufstellungsort oder beim Aufstellen und Anschließen des jeweiligen Heizeinsatzes an den vorhandenen Rauchfang Beschädigungen von Türen, Wänden oder Bodenbelägen, die insbesondere bei neu errichteten oder frisch renovierten Wohnräumen besonders lästig sind und deren Schadensbeseitigung meist aufwendig ist.

Weiters ist von Nachteil, dass meist erst nach dem Aufstellen des entsprechenden Heizeinsatzes erkannt wird, welche Verbindungsstücke in welchen Abmessungen zur Errichtung der Kaminanschlussleitung als Verbindung zwischen dem Heizeinsatz und dem Rauchfang erforderlich sind. Entweder hat ein Monteur dazu eine Unzahl an verschiedenen Verbindungsrohren, Krümmern und Verbindungsbögen samt den erforderlichen Dichtungen, Abdeckblenden etc. jeweils an Ort und Stelle bei der Montage des Heizeinsatzes vorrätig, was kostenintensiv ist. Oder aber die jeweils erforderlichen Bauteile für die Herstellung der Kaminanschlussleitung müssen nach dem Aufstellen des Heizeinsatzes separat bestellt oder aus einem Ersatzteillager geholt werden, was ebenfalls zeit- und kostenintensiv ist. Weiters stellt sich oftmals die Verbrennungszuluftführung insbesondere bei nachträglich eingebauten Heizeinsätzen als problematisch dar.

Ein weiterer Nachteil ist beim Einsatz aus dem Stand der Technik bekannter Heizeinsätze dadurch gegeben, dass die Abmessungen des jeweiligen Heizeinsatzes üblicherweise von den freien Abmessungen des Transportweges durch ein Gebäude bis zum geplanten Aufstellungsort des Heizeinsatzes bestimmt werden. Somit kann beispielsweise ein Heizeinsatz, wie er aus dem Stand der Technik bekannt ist, nur dort aufgestellt werden, wohin er auch aufgrund von Türbreiten und/oder lichte Weiten eines Treppenhauses sowie seines meist hohen Gewichts von durchschnittlich etwa 280 kg pro Heizeinsatz vertragen werden kann. Ebenso verhält es sich mit den vorbereiteten Auslässen zum Anschluss einer Kaminanschlussleitung an einen bestehenden Rauchfang, weshalb derzeit beispielsweise Kaminöfen oder Tischherde nur in nächster Nähe zu einem bestehenden Rauchfang aufgestellt und betrieben werden.

Es ist somit die Aufgabe der vorliegenden Erfindung einen modulartigen Fertigteilofen bereitzustellen, welcher die geschilderten Nachteile des Standes der Technik vermeidet. Diese Aufgabe wird bei einem Fertigteilofenmodul gemäß dem Oberbegriff des Anspruchs 1 mit den Merkmalen des kennzeichnenden Teiles des Anspruchs 1 gelöst. Die Unteransprüche betreffen weitere besonders vorteilhafte Ausgestaltungen der Erfindung.

Bei einem erfindungsgemäßen Fertigteilofenmodul, welches zumindest einen Heizeinsatz mit einer Ofenabzugsöffnung sowie einer Luftzufuhröffnung umfasst, ist der zumindest eine Heizeinsatz mit einer Kaminanschlussleitung an einem Rauchfangabschnitt angeschlossen. In dieser vorteilhaften Ausführung sind bei einem erfindungsgemäßen Fertigteilofenmodul als funktionsfähiges Rohmodul zumindest ein Heizeinsatz und ein Rauchfangabschnitt bereits in fertig angeschlossenem Zustand mit einer Kaminanschlussleitung versehen und zu einem gemeinsamen Modul verbunden. Dieses Fertigteilofenmodul bietet insbesondere bei Neubauten sowie bei der Errichtung von Fertigteilhäusern den Vorteil, dass das Fertigteilofenmodul als vormontierte Einheit von zumindest einem Heizeinsatz mit einem daran angeschlossenen, entsprechenden Rauchfangabschnitt schon bei der Planung eines Gebäudes berücksichtigt und bereits während dessen Errichtung und noch vor der Fertigstellung am Aufstellungsort aufgestellt werden kann. Erforderlichenfalls ist das Fertigteilofenmodul zum Schutz vor Verunreinigung oder Beschädigung bei den weiteren Bauarbeiten, beispielsweise zum Schutz vor einem Mauerputz oder vor Mauerfarbe, mit einem entsprechenden Transportschutz zu versehen.

Weiters ist es im Rahmen der Erfindung denkbar, auch mehrere Heizeinsätze zu einem Fertigteilofenmodul zu arrangieren. Beispielsweise können ein Kachelofen, welcher mit entsprechenden Anschlussleitungen und Wärmerückgewinnungseinrichtungen an eine gesamte Hauszentralheizung angeschlossen und in diese integriert wird, sowie ein Kaminofen, welcher mit einer verglasten Ofentüre in der kalten Jahreszeit als Zusatzheizung dient und für ein besonders angenehmes Wohngefühl sorgt, jeweils an einen gemeinsamen Rauchfangabschnitt angeschlossen und zu einem erfindungsgemäßen Fertigteilofenmodul gruppiert sein.

In einer weiteren vorteilhaften Ausführung umfasst das erfindungsgemäße Fertigteilofenmodul ein Kühlmodul mit zumindest einem Kühleinsatz, wobei der zumindest eine Kühleinsatz des Kühlmoduls in einen Kühlmittelkreislauf integriert ist. In dieser bevorzugten Ausführung können mit dem Kühlmodul beispielsweise ein Kachelofen, welcher mit entsprechenden Anschlussleitungen und Wärmerückgewinnungseinrichtungen an eine gesamte Hauszentralheizung angeschlossen und in die zentrale Haustechnik integriert wird, oder ein Kaminofen, welcher in der kalten Jahreszeit als Zusatzheizung dient und für ein besonders angenehmes Wohngefühl sorgt, jeweils während der Sommermonate auch zur Wohnraumkühlung verwendet werden. Ein oder mehrere Kühlmodule, deren Kühleinsätze mit entsprechenden Anschlussleitungen jeweils an einen oder mehrere Kühlmittelkreisläufe gekoppelt sind, können somit besonders raumsparend in das Fertigteilofenmodul integriert werden. In dieser vorteilhaften Variante kann das Fertigteilofenmodul besonders platzsparend ganzjährig zur Wohnraumklimatisierung genutzt werden.

Kühleinsätze können beispielsweise als Platten aus Leichtbeton mit innenliegenden, integrierten Kupferleitungen ausgeführt sein. Diese Kupferleitungen sind dabei an den Kühlmittelkreislauf angeschlossen. Durch die in den Kühlmittelkreislauf integrierten Kupferleitungen, welche beispielsweise von Kaltwasser als Kühlmittel durchflossen werden, wird eine wirtschaftliche sowie behagliche Kühlung des Wohnraums ermöglicht. Besonders wirtschaftlich kann im Winterbetrieb, also während der Heizsaison, der Kühlmittelkreislauf so gesteuert werden, dass dieser in den Heizkreislauf integrierbar ist. Somit werden die Kupferleitungen des Kühlmittelkreislaufs in den Kühleinsätzen vorteilhaft zur Warmwasserbereitung während der Wintermonate genutzt.

Ein erfindungsgemäßes Fertigteilofenmodul kann beispielsweise während der Errichtung eines Gebäudes mittels eines Hebekrans an Ort und Stelle des Aufstellungsorts gehoben werden. Als weitere Anschlussarbeiten sind im Wesentlichen nur mehr der Rauchfangabschnitt des Fertigteilofenmoduls in einen Rauchfangschacht des Gebäudes zu integrieren und gegebenenfalls weitere Anschlussleitungen wie beispielsweise Temperaturkontrolleinrichtungen zur zentralen Steuerung und/oder Regelung des zumindest einen Heizeinsatzes und/oder des zumindest einen Kühleinsatzes oder Anschlussleitungen zur Integration des Fertigteilofenmoduls in eine Zentralheizungsanlage herzustellen. Bei Verwendung eines Fertigteilofenmoduls, welches ein Kühlmodul mit zumindest einem Kühleinsatz umfasst ist weiters das Kühlmodul bzw. jeder Kühleinsatz des Kühlmoduls in einen Kühlmittelkreislauf zu integrieren. Damit ist es möglich, zumindest Abschnitte des Fertigteilofenmoduls wahlweise auch zur Raumkühlung zu verwenden.

Besonders vorteilhaft sind bei einem erfindungsgemäßen Fertigteilofenmodul der zumindest eine Heizeinsatz und/oder der zumindest eine Kühleinsatz sowie der Rauchfangabschnitt auf einer gemeinsamen Standplatte montiert. In dieser bevorzugten Ausführung sind sämtliche Baugruppen des Fertigteilofenmoduls auf einer gemeinsamen Standplatte angeordnet, wodurch der Transport des Fertigteilofenmoduls an den jeweiligen Aufstellungsort sowie die dortige Lagejustierung besonders einfach möglich sind.

Zweckmäßig ist bei einem Fertigteilofenmodul gemäß der Erfindung der Heizeinsatz aus einer Gruppe umfassend: Kaminofen, Kachelofen, Heizkamin, Tischherd, ausgewählt. Vorteilhaft können beliebige Heizeinsätze und/oder Kühleinsätze im Rahmen der Erfindung für ein Fertigteilofenmodul ausgewählt werden. Weiters ist es im Rahmen der Erfindung möglich, auch mehrere baugleiche oder unterschiedliche Typen von Heizeinsätzen und/oder Kühleinsätzen zu einem Fertigteilofenmodul zu gruppieren. Jeder Heizeinsatz ist dabei bereits mit einer Kaminanschlussleitung an den Rauchfangabschnitt des Fertigteilofenmoduls angeschlossen. Jeder Kühleinsatz ist an einen Kühlmittelkreislauf angeschlossen bzw. in diesen integriert. Je nach Ausführung können bei einem Fertigteilofenmodul unterschiedliche Heizeinsätze beispielsweise für die Feuerung mit Pellets, Stückgutholz oder mit gepressten Holzbriketts vorgesehen sein. Ebenso können im Rahmen der Erfindung Heizeinsätze verwendet werden, die besonders flexibel mit unterschiedlichen Brennstoffen beheizt werden können und die beispielsweise sowohl mit Pellets, als auch mit Stückgutholz, Scheitholz, Holzabfällen und/oder mit gepressten Holzbriketts befeuert werden können.

In einer Weiterbildung der Erfindung ist bei einem Fertigteilofenmodul der zumindest eine Heizeinsatz und/oder Kühleinsatz mit dem Rauchfangabschnitt im Bereich einer Rauchfangreinigungsöffnung verbunden. In dieser vorteilhaften Ausführungsvariante der Erfindung befindet sich im Bereich einer Rauchfangreinigungsöffnung, welche meist am unteren Abschnitt eines Rauchfangs und somit im Wesentlichen auf Höhenniveau des Heizeinsatzes angeordnet ist, eine Verbindung zum Heizeinsatz. Somit wird verhindert, dass bei Reinigungsarbeiten am Rauchfang bei geöffneter Rauchfangreinigungsöffnung Asche und Ruß den Aufstellungsort des Fertigteilofenmoduls verunreinigen. Ebenso ist es im Rahmen der Erfindung denkbar, dass der zumindest eine Kühleinsatz mit dem Rauchfangabschnitt verbunden ist, um beispielsweise Leitungen des Kühlmittelkreislaufs entlang des Rauchfangabschnitts zu führen.

Besonders zweckmäßig ist bei einem erfindungsgemäßen Fertigteilofenmodul eine Rauchfangreinigungsöffnung von einem Feuerraum des Heizeinsatzes aus zugänglich. In dieser besonders vorteilhaften Ausführung ist die Rauchfangreinigungsöffnung vom Feuerraum des Heizeinsatzes durch die Ofentüre hindurch erreichbar. Ruß und Asche, die bei der Reinigung des Rauchfangs bei geöffneter Rauchfangreinigungsöffnung anfallen, werden somit innerhalb des Feuerraums aufgefangen und gesammelt und können von dort durch die Ofentüre hindurch ohne Verunreinigungen des Wohnraums dem Fertigteilofenmodul entnommen und entsorgt werden. Weiters kann bei einem Fertigteilofenmodul, welches ein Kühlmodul umfasst, die Rauchfangreinigungsöffnung vom Kühleinsatz aus zugänglich sein.

In einer vorteilhaften Ausführungsvariante der Erfindung ist bei einem Fertigteilofenmodul die Standplatte aus einem Werkstoff der Gruppe umfassend: Metall, Beton, faserbewehrter Beton, hergestellt. Somit sind der funktionellen Konstruktion sowie der ästhetischen Gestaltung des Fertigteilofenmoduls keinerlei Grenzen gesetzt.

Zweckmäßig sind bei einem Fertigteilofenmodul gemäß der Erfindung an einer Unterseite der Standplatte Stellfüße angeordnet. Anhand von mehreren Stellfüßen können die Lasten des Fertigteilofenmoduls über die Aufstellungsfläche gleichmäßig verteilt an das Gebäude übertragen werden und die Stellfüße lassen sich je nach Ausführung besonders einfach an unterschiedliche Höhenniveaus des Aufstellungsorts anpassen. Unebenheiten beispielsweise am Fußboden des Aufstellungsorts können somit bei der Aufstellung des Fertigteilofenmoduls berücksichtigt und ausgeglichen werden.

Besonders komfortabel sind in einer bevorzugten Ausführungsvariante bei einem erfindungsgemäßen Fertigteilofenmodul die Stellfüße höhenverstellbar. Somit kann in dieser Ausführung die Standplatte des Fertigteilofenmoduls mittels der höhenverstellbaren Stellfüße besonders einfach in im Wesentlichen horizontaler bzw. vertikaler Lage justiert werden.

In einer weiteren vorteilhaften Ausführung der Erfindung sind bei einem Fertigteilofenmodul Versetzschlaufen vorzugsweise an einer Oberseite des Fertigteilofenmoduls angeordnet. In dieser Ausführung wird durch die Versetzschlaufen das Verheben des Fertigteilofenmoduls mit einem Hebezeug, beispielsweise mit einem Hebekran, an den Aufstellungsort wesentlich vereinfacht. Hebegurte können dabei besonders einfach an den Versetzschlaufen angeschlagen und ein sicherer Transport des Fertigteilofenmoduls an einem Hebekran gewährleistet werden. Je nach Ausführung bleiben die Versetzschlaufen dabei am Fertigteilofenmodul wahlweise befestigt oder diese können nach erfolgter Aufstellung demontiert werden.

Zweckmäßig ist bei einem erfindungsgemäßen Fertigteilofenmodul der Rauchfangabschnitt aus einer Gruppe umfassend: Metallrauchfang, Metall-/Keramik-Rauchfang, keramischer Rauchfang, Fertigteilrauchfang mit keramischen Innenrohren, monolithischer Fertigteilrauchfang mit keramischen Innenrohren, Leichtbauschachtrauchfang (mit Keramik, Schamotte oder Edelstahlrohren), ausgewählt. Im Rahmen der Erfindung können unterschiedlichste Bauarten von Rauchfängen als Rauchfangabschnitt eines Fertigteilofenmoduls eingesetzt werden.

In einer bevorzugten Weiterbildung der Erfindung ist bzw. sind bei einem Fertigteilofenmodul der Heizeinsatz und/oder der Kühleinsatz und/oder der Rauchfangabschnitt zumindest abschnittsweise mit einer Verkleidung bedeckbar. In dieser vorteilhaften Ausführung der Erfindung wird das Fertigteilofenmodul als funktionsfähiges Rohmodul an Ort und Stelle des Aufstellungsorts verbracht und dort an den Rauchfang bzw. die weiteren erforderlichen Verbindungsleitungen - wie beispielsweise im Falle eines Fertigteilofenmoduls mit einem Kühlmodul an die Kühlmittelleitungen - angeschlossen. Individuelle Verkleidungen, die an die Abmessungen sowie an die ästhetischen Anforderungen des jeweiligen Aufstellungsorts angepasst werden, können im Rahmen der Erfindung problemlos am Fertigteilofenmodul befestigt werden.

Zweckmäßig ist im Rahmen der Erfindung bei einem Fertigteilofenmodul die Verkleidung abnehmbar. Durch die abnehmbare Verkleidung werden Wartungsarbeiten wesentlich vereinfacht. Weiters ist es in dieser Ausführungsvariante einfach möglich, durch Austausch von Verkleidungspaneelen das Erscheinungsbild des Fertigteilofenmoduls an die jeweilige Einrichtung anzupassen.

In einer weiteren bevorzugten Ausführung der Erfindung ist bei einem Fertigteilofenmodul die Verkleidung aus einem Werkstoff der Gruppe umfassend: Wärmespeicherbeton, Schamotte, Keramik, hergestellt. Je nach den Anforderungen des jeweiligen Aufstellungsorts können somit Verkleidungen aus unterschiedlichen Materialien eingesetzt werden. Je nach Materialauswahl werden mit der Verkleidung damit entweder ästhetische Vorgaben - beispielsweise durch den Einsatz von Keramikkacheln als Verkleidungsmaterial - und/oder funktionale Vorgaben - beispielsweise durch den Einsatz von Wärmespeicherbeton - erfüllt. Die Grundausführung des Fertigteilofenmoduls ist dabei spachtelfertig ausgeführt, daher kann die Oberfläche beliebig gestaltet werden. Weiters kann die Oberflächengestaltung der Außenhülle des Fertigteilofenmoduls bzw. dessen Verkleidung mittels Digitaldruck und/oder diverser Lackiertechniken in verschiedensten Ausführungen hergestellt werden. Diese Möglichkeit der individuellen Gestaltung des Fertigteilofenmoduls bietet besondere Vorteile der Erfindung.

Zusätzlich können Leichtbaubetonplatten in verschiedensten Ausführungen sowie in individuell anzupassenden Abmessungen und Farben als äußerste Verkleidung herangezogen werden. Diese Fertigteilleichtbauplatten sind leicht montier- und demontierbar und können daher relativ einfach um die Optik zu verändern getauscht werden.

Besonders vorteilhaft umfasst ein erfindungsgemäßes Fertigteilofenmodul weiterhin zumindest eine Frischluftanbindung und/oder eine Kondensatableitung und/oder eine Temperaturkontrolleinrichtung und/oder eine Wohnraumlüftungseinrichtung und/oder eine Wärmerückgewinnungseinrichtung und/oder ein Filtersystem und/oder eine Entaschungsautomatik sowie allenfalls weitere Kühleinrichtungen. Insbesondere bei einer Anbindung und Integration des Fertigteilofenmoduls in eine zentrale Hausheizung sind gegebenenfalls weitere Einrichtungen zur Regelung bzw. Steuerung des Heizeinsatzes und/oder des Kühleinsatzes erforderlich. Beispielsweise können dazu jeweils eine oder mehrere Kondensatableitungen und/oder Temperaturkontrolleinrichtungen und/oder Wohnraumlüftungseinrichtungen und/oder Wärmerückgewinnungseinrichtungen und/oder Kühleinheiten im Rahmen der Erfindung mit einem Fertigteilofenmodul gemeinsam vormontiert bzw. in einem solchen Fertigteilofenmodul integriert sein.

Um Feinstaub-Emissionen im Betrieb des Fertigteilofenmoduls zu minimieren, kann das Fertigteilofenmodul als Option mit einem dementsprechenden Filtersystem nachgerüstet werden oder ein Filtersystem ist bereits in der Kaminanschlussleitung oder im Rauchfangabschnitt integriert.

Wartungsintervalle für die beim Betrieb des Moduls erforderliche Entaschung, für diverse Wartungsarbeiten sowie für Regelungsmöglichkeiten können abhängig vom eingebauten Heizeinsatz über eine WLAN-Anbindung erfasst und somit beispielsweise über das Internet an den Nutzer übermittelt werden sowie extern gesteuert werden.

In einer Weiterbildung der Erfindung ist bei einem Fertigteilofenmodul die Kaminanschlussleitung zumindest abschnittsweise von einem Speichereinsatz umgeben. Der Speichereinsatz ist beispielsweise aus Speicherziegeln mit hoher Wärmespeicherkapazität aufgebaut. Die Kaminanschlussleitung wird beispielsweise innerhalb des Speichereinsatzes entsprechend umgelenkt, sodass eine möglichst große Wärmetauschfläche zwischen dem Speichereinsatz und der vom Speichereinsatz ummantelten Kaminanschlussleitung gegeben ist. Vorteilhaft wird im Heizbetrieb des Heizeinsatzes Abwärme der Kaminanschlussleitung als Speicherwärme im Speichereinsatz gespeichert. Die im Speichereinsatz gespeicherte Wärme steht somit besonders komfortabel für eine Wohnraumbeheizung noch längere Zeit zur Verfügung, auch wenn die Beheizung des Heizeinsatzes bereits beendet ist. Somit wird auch mit einem Fertigteilofenmodul eine lang anhaltende, gesunde Wärmespeicherung vergleichbar mit der Speicherwirkung eines Kachelofens ermöglicht. Weiters ist von Vorteil, dass mit dem Speichereinsatz eine Leistungsreduktion insbesondere bei Niedrigenergie- oder Passivhäusern möglich ist.

Zweckmäßig erstreckt sich bei einem erfindungsgemäßen Fertigteilofenmodul ein Rauchfangabschnitt, vorzugsweise ein Rauchfangrohr des Rauchfangabschnitts, durch eine Geschoßdecke hindurch nach unten und ist mit einer Rauchfangputztüre versehen, welche unterhalb der Geschoßdecke zugänglich ist. Diese Ausführung bietet den Vorteil, dass notwendige Reinigungsarbeiten des Rauchfangs bzw. Rauchfangabschnitts nicht vom Wohnraum aus, in dem das Fertigteilofenmodul aufgestellt ist, sondern von einem darunter liegenden Raum, beispielsweise einem Kellerraum, aus erledigt werden können. Dazu ist der Rauchfangabschnitt mit einer Rauchfangputztüre ausgestattet, die vom darunter liegenden Raum aus gut zugänglich ist. Vorteilhaft werden somit bei Reinigungsarbeiten des Rauchfangs Wohnräume bzw. der Aufstellungsort des Fertigteilofenmoduls nicht verschmutzt.

In einer zweckmäßigen Weiterbildung der Erfindung ist der unterhalb der Standplatte befindliche Rauchfangabschnitt, welcher das Rauchfangrohr sowie die Rauchfangputztüre umfasst, an der Standplatte demontierbar befestigt. Somit kann ein auf einer Standplatte montiertes Fertigteilofenmodul mit demontiertem Rauchfangabschnitt komfortabel gelagert und am jeweiligen Aufstellungsort platziert werden. Nach erfolgter Aufstellung wird der nach unten ragende Rauchfangabschnitt durch eine bereits vorbereitete Öffnung im Fußboden bzw. in der Geschoßdecke durchgesteckt und anschließend mit dem Rauchfang des Fertigteilofenmoduls verbunden.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- Fig. 1 in einer isometrischen Schrägansicht von vorne ein erfindungsgemäßes Fertigteilofenmodul ohne Verkleidung;
- Fig. 2 in einer isometrischen Schrägansicht von vorne ein Fertigteilofenmodul gemäß der Erfindung mit einer teilweise freigeschnittenen Verkleidung an einer Gebäudewand;
- Fig. 3 in einer isometrischen Schrägansicht von vorne ein Fertigteilofenmodul gemäß der Erfindung, welches weiters ein Kühlmodul mit mehreren Kühleinsätzen umfasst, mit einer teilweise freigeschnittenen Verkleidung an einer Gebäudewand;
- Fig. 4 in einer isometrischen Schrägansicht von vorne teilweise freigeschnitten eine erfindungsgemäße Variante eines Fertigteilofenmoduls, bei dem sich ein Rauchfangrohr durch eine Geschoßdecke hindurch nach unten erstreckt und eine Rauchfangputztüre aufweist, welche unterhalb der Geschoßdecke zugänglich ist;
- Fig. 5 in einer isometrischen Schrägansicht von vorne ein Detail einer weiteren erfindungsgemäßen Variante eines Fertigteilofenmoduls mit einer Kaminanschlussleitung, die abschnittsweise von einem Speichereinsatz umgeben ist.

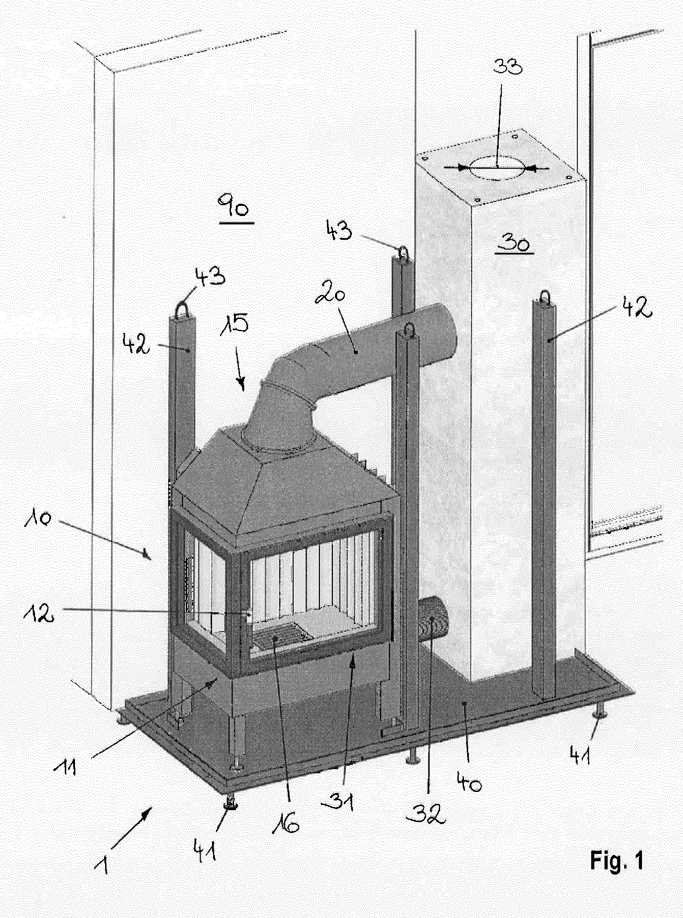

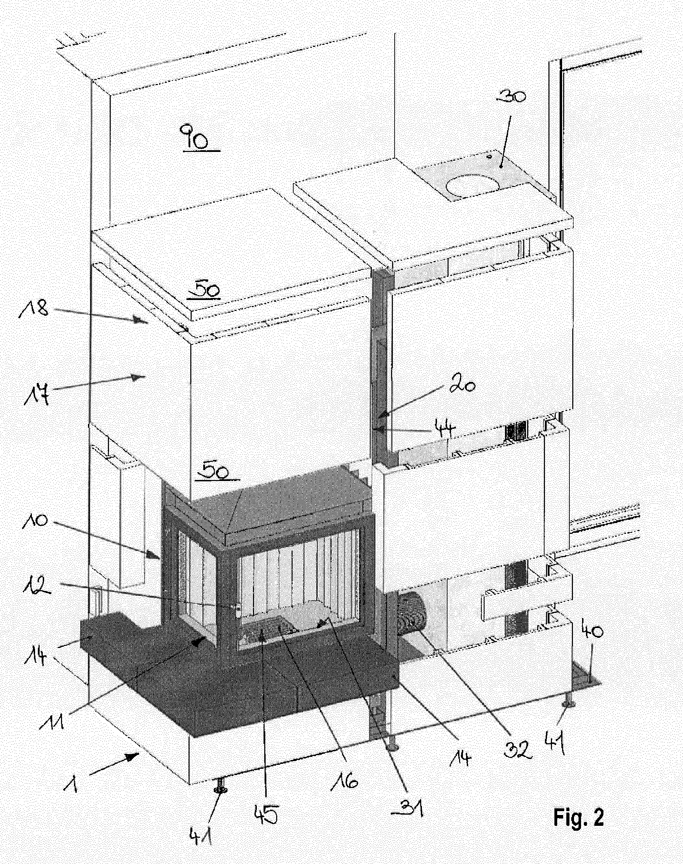

Fig. 1 zeigt ein erfindungsgemäßes Fertigteilofenmodul 1 mit einem Heizeinsatz 10. Als Heizeinsatz wird hier ein Kaminofen 11 verwendet, welcher Kaminofen 11 beispielsweise aus Edelstahl hergestellt ist und eine Kaminofentüre 12 mit einem Glassichtfenster umfasst, durch welches man von außen in einen Feuerraum 13 im Inneren des Kaminofens 11 blicken kann. Ein Feuertisch 14, welcher in Abbildung Fig. 2 dargestellt ist und als formschöner, dekorativer Funken- und Aschenschutz bei einer geöffneten Kaminofentüre 12 dient, ist in Fig. 1 der besseren Übersicht wegen weggelassen.

Der Heizeinsatz 10 umfasst bekanntermaßen eine Ofenabzugsöffnung 15 an der Oberseite des Feuerraums 13 sowie eine Luftzufuhröffnung 16, welche für die Zufuhr der bei der Verbrennung erforderlichen Frischluft bzw. Zuluft dient und an der Unterseite des Feuerraums 13 in den Kaminofen 11 mündet. Je nach Ausführung können unterschiedliche Heizeinsätze 10 beispielsweise für die Feuerung mit Pellets, Stückgutholz oder mit gepressten Holzbriketts vorgesehen sein.

Der Heizeinsatz 10 ist mittels einer Kaminanschlussleitung 20 mit dem Rauchfang 30 bzw. Rauchfangabschnitt 30 verbunden. Eine Rauchfangreinigungsöffnung 31, welche sich unterhalb der Einmündung der Kaminanschlussleitung 20 in den Rauchfang 30 befindet, ist hier mit einem Verbindungsrohr 32 mit dem Kaminofen 11 verbunden und mündet in den Feuerraum 13 des Kaminofens 11. Somit kann bei geöffneter Rauchfangreinigungsöffnung 31 praktischerweise der Rauchfang 30 vom Feuerraum 13 aus durch das Verbindungsrohr 32 gereinigt werden.

Der hier verwendete Rauchfangabschnitt 30 ist als Fertigteilrauchfang mit einem Rauchfangquerschnitt 33 ausgeführt. Sowohl der Rauchfang 30, als auch der Heizeinsatz 10 und die Kaminanschlussleitung 20 sowie weiteres zum Betrieb des Fertigteilofenmoduls 1 gegebenenfalls notwendiges Equipment sind auf einer gemeinsamen Standplatte 40 befestigt. Als Standplatte 40 wird hier eine robuste Metallplatte verwendet, welche an ihrer Unterseite mehrere höhenverstellbare Stellfüße 41 aufweist. An der Standplatte 40 sind im Wesentlichen lotrecht nach oben ragend einige Halterungsständer 42 montiert, welche einerseits zur Befestigung von plattenförmigen Verkleidungen 50 dienen. Andrerseits dienen wie hier gezeigt Versetzschlaufen 43 an den Oberseiten der Halterungsständer 42 dazu, das Fertigteilofenmodul 1 besonders sicher und komfortabel mittels Hebegurten an einem Hebekran zu befestigen. Somit kann das Fertigteilofenmodul 1 möglichst komfortabel mit geeigneten Hebezeugen an seinen Aufstellort meist angrenzend an einer Gebäudewand 90 eines Gebäudes gehoben werden bzw. dort aufgestellt werden.

Fig. 2 stellt ein Fertigteilofenmodul 1 gemäß der Erfindung mit bereits teilweise verkleidetem Heizeinsatz 10 sowie Rauchfang 30 in einer Einbausituation an einer Gebäudewand 90 dar. Ein Feuertisch 14, welcher im Wesentlichen niveaugleich mit dem Boden des Feuerraums 13 angeordnet ist und als Ablagefläche sowie als Schutz vor herabfallender Glut und Asche bei geöffneter Kaminofentüre 12 dient, ist hier bereits am Fertigteilofenmodul 1 befestigt.

Weiteres Zubehör 17, welches gegebenenfalls für den Betrieb des Fertigteilofenmoduls 1 im Rahmen einer Zentralheizung erforderlich ist und zur Integration des Heizeinsatzes 10 in einer Ganzhausheizung dient - als Beispiele seien hier stellvertretend Wärmetauscher oder vergleichbare Wärmerückgewinnungseinrichtungen, Frischluftanbindungsleitungen, Kondensatableitungen und dergleichen genannt - kann formschön unter bzw. hinter den Verkleidungen 50 verdeckt werden. Weiters können auch Kontrolleinrichtungen 18 zur Regelung und Steuerung des Heizeinsatzes 10 unterhalb der Verkleidungen 50 angeordnet werden. Die Verkleidungen 50 sind vorteilhaft abnehmbar ausgeführt, weshalb zu Wartungszwecken sämtliche Baugruppen des Fertigteilofenmoduls 1 von außen gut zugänglich sind.

Die Kaminanschlussleitung 20 ist hier mit einem Feinstaubfilter 44 ausgerüstet, welcher ebenfalls hinter bzw. unter den zu Wartungszwecken abnehmbar gestalteten Verkleidungen 50 angeordnet ist. Somit werden Feinstaubemissionen im laufenden Heizungsbetrieb vorteilhaft minimiert und der Betrieb des Fertigteilofenmoduls 1 ist besonders umweltfreundlich. Im Bereich der Luftzufuhröffnung 16 unterhalb des Feuerraums 13 ist eine Entaschungsautomatik 45 vorgesehen. Von der Entaschungsautomatik 45 wird beispielsweise ein Signal ausgesendet, wenn die gesammelte Verbrennungsasche entleert werden muss. Im Falle einer Regelung des Heizeinsatzes über eine WLAN-Anbindung kann von der Entaschungsautomatik 45 ein Warnsignal beispielsweise über das Internet an den Nutzer übermittelt werden, sobald das Fertigteilofenmodul 1 zu reinigen ist.

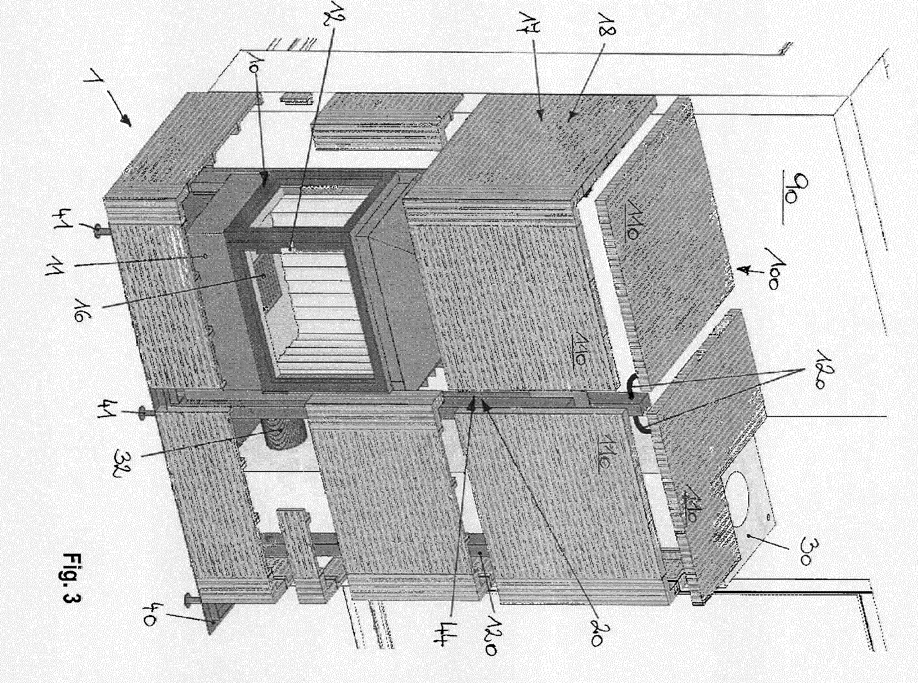

Fig. 3 veranschaulicht in einer isometrischen Schrägansicht von vorne ein Fertigteilofenmodul 1 gemäß der Erfindung, welches weiters ein Kühlmodul 100 mit mehreren Kühleinsätzen 110 umfasst. Die Kühleinsätz3 110 sind jeweils an einen Kühlmittelkreislauf 120 angeschlossen bzw. in diesen integriert. Je nach Ausführung bilden die Kühleinsätze 110 entweder selbst die Verkleidung 50 des Fertigteilofenmoduls 1, oder diese liegen knapp unterhalb der Verkleidungsplatten 50 bzw. grenzen an diese an. Hier in Fig. 3 sind die Kühleinsätze 110 beispielsweise als Platten aus Leichtbeton mit innenliegenden, integrierten Kupferleitungen ausgeführt. Die plattenförmigen Kühleinsätze 110 dienen als Wärmeübertrager und sind in ihrer Funktion mit Kühlmodulen zur Wand- oder Deckenkühlung vergleichbar. Die Kupferleitungen innerhalb der Kühleinsätze 110 sind an den Kühlmittelkreislauf 120 angeschlossen. Mit dem Kühlmodul 100 des Fertigteilofenmoduls 1 wird somit die zentrale Kühlung eines Wohnraums ermöglicht. Durch die in den Kühlmittelkreislauf 120 integrierten Kupferleitungen, welche beispielsweise von Kaltwasser als Kühlmittel durchflossen werden, wird eine wirtschaftliche sowie behagliche Kühlung des Wohnraums erzielt. Besonders wirtschaftlich kann im Winterbetrieb, also während der Heizsaison, der Kühlmittelkreislauf 120 so gesteuert werden, dass dieser in den Heizkreislauf integrierbar ist. Somit können die Kupferleitungen des Kühlmittelkreislaufs 120 in den Kühleinsätzen 110 während der Wintermonate vorteilhaft zur Warmwasserbereitung genutzt werden.

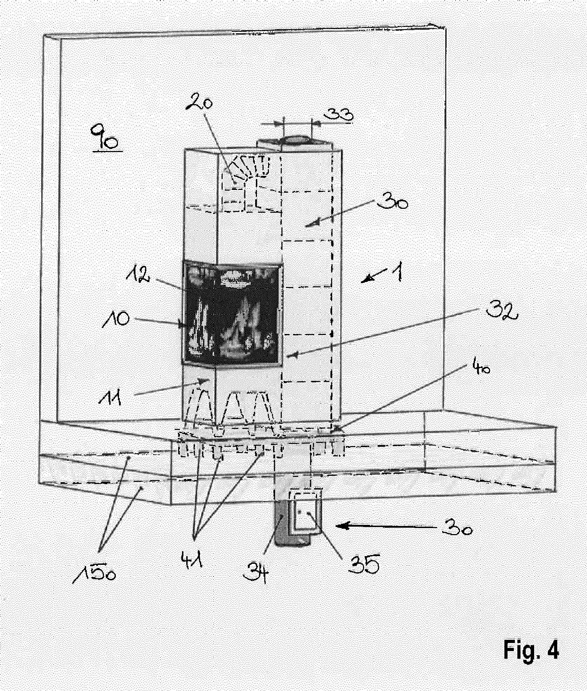

Fig. 4 zeigt eine erfindungsgemäße Variante eines Fertigteilofenmoduls 1, bei dem sich ein Rauchfangrohr 34 durch eine Geschoßdecke 150 hindurch nach unten in einen darunterliegenden Raum des Gebäudes erstreckt und eine Rauchfangputztüre 35 aufweist, welche unterhalb der Geschoßdecke 150 zugänglich ist. Diese Ausführung bietet den Vorteil, dass notwendige Reinigungsarbeiten des Rauchfangs 30 bzw. Rauchfangsabschnitts 30 nicht vom Wohnraum aus, in dem das Fertigteilofenmodul 1 aufgestellt ist, sondern von einem darunter liegenden Raum, beispielsweise einem Kellerraum aus erledigt werden können. Dazu ist der Rauchfangabschnitt 30 mit einer Rauchfangputztüre 35 ausgestattet, die vom darunter liegenden Raum aus gut zugänglich ist. Somit gelangen bei Reinigungsarbeiten des Rauchfangs 30 keine Verunreinigungen in den Wohnraum bzw. zum Aufstellungsort des Fertigteilofenmoduls 1. Vorteilhaft ist der unterhalb der Standplatte 40 befindliche Rauchfangabschnitt 30, welcher das Rauchfangrohr 34 sowie die Rauchfangputztüre 35 umfasst, an der Standplatte 40 demontierbar befestigt.

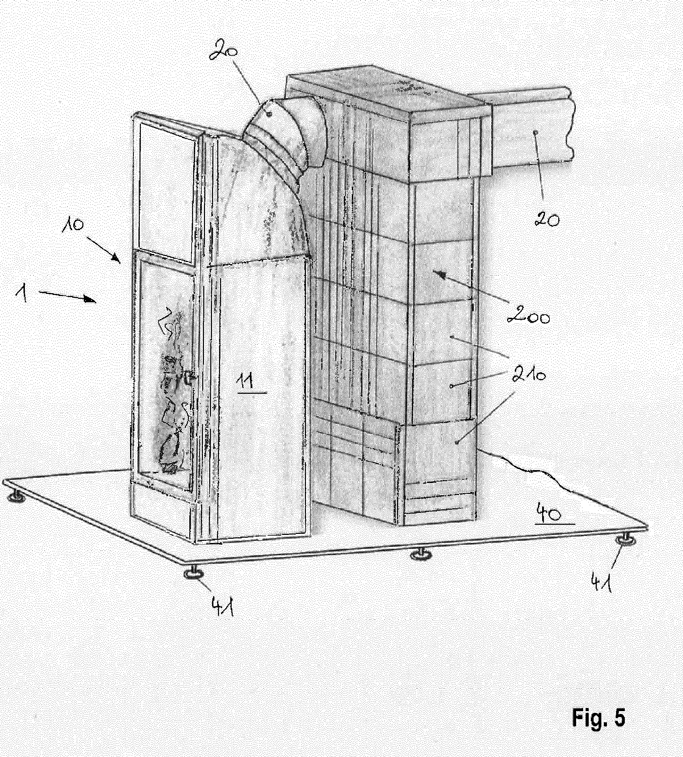

Fig. 5 veranschaulicht in einer isometrischen Schrägansicht von vorne ein Detail einer weiteren erfindungsgemäßen Variante eines Fertigteilofenmoduls 1 mit einer Kaminanschlussleitung 20, die abschnittsweise von einem Speichereinsatz 200 umgeben ist. Der Speichereinsatz 200 ist hier beispielsweise aus Speicherziegeln 210 mit hoher Wärmespeicherkapazität aufgebaut. Die Kaminanschlussleitung 20 wird dazu innerhalb des Speichereinsatzes 200 entsprechend umgelenkt, sodass eine möglichst große Wärmetauschfläche zwischen dem Speichereinsatz 200 und der vom Speichereinsatz 200 ummantelten Kaminanschlussleitung 20 gegeben ist. Vorteilhaft wird im Heizbetrieb des Heizeinsatzes 10 Abwärme der Kaminanschlussleitung 20 im Speichereinsatz 200 gespeichert. Die im Speichereinsatz 200 gespeicherte Wärme steht somit besonders komfortabel für eine Wohnraumbeheizung noch längere Zeit zur Verfügung, auch wenn die Beheizung des Heizeinsatzes 10 bereits beendet ist. In Fig. 5 ist ersichtlich, dass sowohl der Heizeinsatz 10, als auch der Speichereinsatz 200 samt der teilweise darin befindlichen Kaminanschlussleitung 20 auf einer gemeinsamen Standplatte 40 montiert sind. Der Übersicht wegen ist ein Rauchfangabschnitt 30, an dem der Heizeinsatz 10 mit der Kaminanschlussleitung 20 angeschlossen ist, hier in Fig. 5 nicht dargestellt.

Weitere in den Zeichnungen nicht explizit dargestellte Ausführungsformen eines Fertigteilofenmoduls beispielsweise mit zwei Heizeinsätzen, welche beide jeweils an einen Rauchfangabschnitt angeschlossen sind, werden ebenfalls von der Erfindung mitumfasst. Ebenso können die Kühlmitteleinsätze auch aus beliebigen anderen, wärmeleitenden Materialien hergestellt sein.

### Liste der Positionszeichen:

- 1: Fertigteilofenmodul
- 10: Heizeinsatz
- 11: Kaminofen
- 12: Kaminofentüre
- 13: Feuerraum
- 14: Feuertisch
- 15: Ofenabzugsöffnung
- 16: Luftzufuhröffnung
- 17: Zubehör für Heizeinsatz
- 18: Kontrolleinrichtung für Heizeinsatz
- 20: Kaminanschlussleitung
- 30: Rauchfang bzw. Rauchfangabschnitt
- 31: Reinigungsöffnung
- 32: Verbindungsrohr
- 33: Rauchfangquerschnitt
- 34: Rauchfangrohr
- 35: Rauchfangputztüre
- 40: Standplatte
- 41: Stellfuß (höhenverstellbar)
- 42: Halterungsständer
- 43: Versetzschlaufe
- 44: Feinstaubfilter
- 45: Entaschungsautomatik
- 50: Verkleidung
- 90: Gebäudewand
- 100: Kühlmodul
- 110: Kühleinsatz
- 120: Kühlmittelkreislauf
- 150: Geschoßdecke bzw. Fußboden
- 200: Speichereinsatz
- 210: Speicherziegel

## Patentansprüche

1. Fertigteilofenmodul (1), umfassend zumindest einen Heizeinsatz (10) mit einer Ofenabzugsöffnung (15) sowie einer Luftzufuhröffnung (16), **dadurch gekennzeichnet, dass** der zumindest eine Heizeinsatz (10) mit einer Kaminanschlussleitung (20) an einem Rauchfangabschnitt (30) angeschlossen ist.

2. Fertigteilofenmodul (1) nach Anspruch 1, weiterhin umfassend ein Kühlmodul (100) mit zumindest einem Kühleinsatz (110), **dadurch gekennzeichnet, dass** der zumindest eine Kühleinsatz (110) in einen Kühlmittelkreislauf (120) integriert ist.

3. Fertigteilofenmodul (1) nach Anspruch 1 oder 2, **dadurch gekennzeichnet, dass** der zumindest eine Heizeinsatz (10) und/oder der zumindest eine Kühleinsatz (110) sowie der Rauchfangabschnitt (30) auf einer gemeinsamen Standplatte (40) montiert sind.

4. Fertigteilofenmodul (1) nach einem der Ansprüche 1 bis 3, **dadurch gekennzeichnet, dass** der zumindest eine Heizeinsatz (10) und/oder der zumindest eine Kühleinsatz (110) mit dem Rauchfangabschnitt (30) im Bereich einer Rauchfangreinigungsöffnung (31) verbunden (32) ist bzw. sind.

5. Fertigteilofenmodul (1) nach einem der Ansprüche 1 bis 4, **dadurch gekennzeichnet, dass** eine Rauchfangreinigungsöffnung (31) von einem Feuerraum (13) des Heizeinsatzes (10) und/oder vom Kühleinsatz (110) aus zugänglich ist.

6. Fertigteilofenmodul (1) nach einem der Ansprüche 3 bis 5, **dadurch gekennzeichnet, dass** die Standplatte (40) aus einem Werkstoff der Gruppe umfassend: Metall, Beton, faserbewehrter Beton, hergestellt ist.

7. Fertigteilofenmodul (1) nach einem der Ansprüche 3 bis 6, **dadurch gekennzeichnet, dass** an einer Unterseite der Standplatte (40) Stellfüße (41) angeordnet sind, die vorzugsweise höhenverstellbar sind.

8. Fertigteilofenmodul (1) nach einem der vorigen Ansprüche, **dadurch gekennzeichnet, dass** Versetzschlaufen (43) vorzugsweise an einer Oberseite des Fertigteilofenmoduls (1) angeordnet sind.

9. Fertigteilofenmodul (1) nach einem der vorigen Ansprüche, **dadurch gekennzeichnet, dass** der Rauchfangabschnitt (30) aus einer Gruppe umfassend: Metallrauchfang, Metall-/Keramik-Rauchfang, keramischer Rauchfang, Fertigteilrauchfang, monolithischer Fertigteilrauchfang, Leichtbauschachtrauchfang, ausgewählt ist.

10. Fertigteilofenmodul (1) nach einem der vorigen Ansprüche, **dadurch gekennzeichnet, dass** der Heizeinsatz (10) und/oder der Kühleinsatz (110) und/oder der Rauchfangabschnitt (30) zumindest abschnittsweise mit einer Verkleidung (50) bedeckbar ist bzw. sind.

11. Fertigteilofenmodul (1) nach Anspruch 10, **dadurch gekennzeichnet, dass** die Verkleidung (50) abnehmbar ist.

12. Fertigteilofenmodul (1) nach Anspruch 10 oder 11, **dadurch gekennzeichnet, dass** die Verkleidung (50) aus einem Werkstoff der Gruppe umfassend: Wärmespeicherbeton, Schamotte, Keramik, hergestellt ist.

13. Fertigteilofenmodul (1) nach einem der vorigen Ansprüche, weiterhin umfassend zumindest eine Frischluftanbindung und/oder eine Kondensatableitung und/oder eine Temperaturkontrolleinrichtung und/oder eine Wohnraumlüftungseinrichtung und/oder eine Wärmerückgewinnungseinrichtung und/oder ein Filtersystem (44) und/oder eine Entaschungsautomatik (45).

14. Fertigteilofenmodul (1) nach einem der vorigen Ansprüche, **dadurch gekennzeichnet, dass** die Kaminanschlussleitung (20) zumindest abschnittsweise von einem Speichereinsatz (200) umgeben ist.

15. Fertigteilofenmodul (1) nach einem der vorigen Ansprüche, **dadurch gekennzeichnet, dass** sich ein Rauchfangabschnitt (30), vorzugsweise ein Rauchfangrohr (34) des Rauchfangabschnitts (30), durch eine Geschoßdecke (150) hindurch nach unten erstreckt und mit einer Rauchfangputztüre (35) versehen ist, welche unterhalb der Geschoßdecke (150) zugänglich ist.
